(19) Europäisches Patentamt
European Patent Office
Office européen des brevets

(11) EP 4 592 905 A1

(12) **EUROPEAN PATENT APPLICATION**

(43) Date of publication:
**30.07.2025 Bulletin 2025/31**

(21) Application number: **24215099.3**

(22) Date of filing: **25.11.2024**

(51) International Patent Classification (IPC):
***G06N 3/126*** *(2023.01)* ***G06N 5/01*** *(2023.01)*

(52) Cooperative Patent Classification (CPC):
**G06N 5/01; G06N 3/126**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.01.2024 JP 2024010328**

(71) Applicant: **Fujitsu Limited**
**Kawasaki-shi, Kanagawa 211-8588 (JP)**

(72) Inventor: **Maruo, Akito**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **ARITHMETIC PROGRAM, ARITHMETIC METHOD, AND INFORMATION PROCESSING DEVICE**

(57) An arithmetic program causes a computer to execute a process including: when arithmetic processing is repeatedly performed in which an Ising model is created based on a training data group, a first recommended point that corresponds to a first set number is retrieved for the Ising model, a second recommended point that corresponds to a second set number is retrieved for the training data group by genetic algorithm, and each set of the first recommended point and a first evaluation value of the first recommended point and the second recommended point and a second evaluation value of the second recommended point is added to the training data group as training data, generating an integer array of a plurality of types as an initial point of each piece of the training data of the training data group;
searching for the first recommended point by providing a constraint in which, when the first recommended point is retrieved, an index of a variable in the integer array is set to i and an index that represents a type of the variable is set to j for each piece of the training data, a case of i = j in the integer array in a matrix of i and j is set to 1 and another case is set to 0 to perform conversion into a bit array of i and j, and only one variable in each row is 1 in the matrix; and applying the genetic algorithm to a format of the integer array when the second recommended point is retrieved.

FIG. 5A

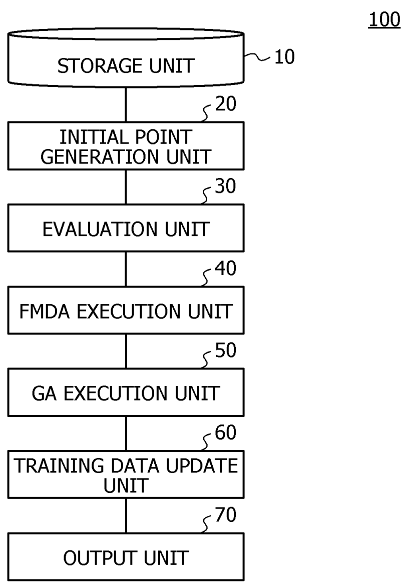


EP 4 592 905 A1

## Description

FIELD

The embodiment discussed herein is related to an arithmetic program, an arithmetic method, and an information processing device.

BACKGROUND

A technique for performing optimization using a binary variable has been disclosed.
Japanese Laid-open Patent Publication No. 2023-108368, International Publication Pamphlet No. WO 2023/276213, and Japanese Laid-open Patent Publication No. 2022-90249 are disclosed as related art.

SUMMARY

TECHNICAL PROBLEM

For example, it has been considered to sample binary variables to perform optimization. A sampling technique using an Ising model in a quadratic unconstrained binary optimization (QUBO) format is an approach for sequentially sampling recommended points in the model, and accordingly, a sampling region may be limited. Thus, as a result, the number of times of sampling may increase.
In one aspect, an object of the present case is to provide an arithmetic program, an arithmetic method, and an information processing device capable of reducing the number of times of sampling.
According to an aspect of the embodiments, an arithmetic program causes a computer to execute a process including: when arithmetic processing is repeatedly performed in which an Ising model is created based on a training data group, a first recommended point that corresponds to a first set number is retrieved for the Ising model, a second recommended point that corresponds to a second set number is retrieved for the training data group by genetic algorithm, and each set of the first recommended point and a first evaluation value of the first recommended point and the second recommended point and a second evaluation value of the second recommended point is added to the training data group as training data, generating an integer array of a plurality of types as an initial point of each piece of the training data of the training data group; searching for the first recommended point by providing a constraint in which, when the first recommended point is retrieved, an index of a variable in the integer array is set to i and an index that represents a type of the variable is set to j for each piece of the training data, a case of $i = j$ in the integer array in a matrix of i and j is set to 1 and another case is set to 0 to perform conversion into a bit array of i and j, and only one variable in each row is 1 in the matrix; and applying the genetic algorithm to a format of the integer array when the second recommended point is retrieved.

ADVANTAGEOUS EFFECTS OF INVENTION

The number of times of sampling may be reduced.

BRIEF DESCRIPTION OF DRAWINGS

FIG. 1 is a diagram exemplifying a search for a solution in a QUBO format;
FIG. 2 is a diagram illustrating evaluation values of movies viewed by a large number of users;
FIG. 3 is a flowchart illustrating an execution procedure in a sampling technique using a model in the QUBO format;
FIG. 4 is a diagram for explaining an outline of a one-way one-hot constraint;
FIG. 5A is a block diagram exemplifying an overall configuration of an information processing device, and FIG. 5B is a block diagram exemplifying a hardware configuration of the information processing device;
FIG. 6 is a flowchart illustrating exemplary operation of the information processing device;
FIG. 7 is a flowchart illustrating details of step S11;
FIG. 8 is a diagram illustrating an example of steps S21 and S22;
FIG. 9 is a diagram illustrating another example of steps S21 and S22;
FIG. 10 is a flowchart illustrating details of step S13;
FIG. 11A is a diagram exemplifying crossover, and FIG. 11B is a diagram exemplifying mutation;
FIG. 12 is a diagram summarizing processing of an embodiment;

FIG. 13 is a diagram exemplifying a test problem;

FIG. 14 is a diagram illustrating a best value found through a search; and

FIG. 15A is a diagram illustrating details of a result of an approach using only FM-DA, and FIG. 15B is a diagram illustrating details of a result of an approach according to the embodiment.

DESCRIPTION OF EMBODIMENTS

A binary variable sampling technique is used as a technique for searching a large number of combinations, orders, and the like for a good solution having a high evaluation value. Examples of the binary variable sampling technique include a sampling technique of randomly performing sampling, a sampling technique using an Ising model in a QUBO format, and the like.

While the sampling technique of randomly performing sampling allows sampling to be easily performed, it has a disadvantage that sampling efficiency is poor and that the number of times of sampling increases to obtain a good solution with high accuracy.

For example, a factorization machine with quantum annealing (FMQA) or the like is exemplified as the sampling technique using a model in the QUBO format. The FMQA is an approach in which quantum annealing (QA) and a factorization machine (FM; machine learning approach) are combined. The FMQA is an approach of performing interactive sampling in which an FM model in the QUBO format is created from training data, a good solution is obtained through the QA, an evaluation value of the good solution is analyzed by a solver, and a result is added to the training data. Besides, a factorization machine with digital annealer (FMDA) technique is exemplified as the sampling technique using a model in the QUBO format. The FMDA is obtained by replacing the QA part of the FMQA with an Ising machine such as a digital annealer (DA).

Here, the QUBO format stands for quadratic unconstrained binary optimization, which is a format in which binary optimization is allowed without a secondary constraint. For example, the QUBO format may be expressed as in the following formula. Note that $x_i = 0$ or 1 ($i = 1, ..., N$) holds. A coupling coefficient of $x_i$ and $x_j$ is denoted by $W_{ij}$. A bias coefficient of $x_i$ is denoted by $b_i$. The first term on the right side is a quadratic term, which represents an interaction. The second term on the right side is a linear term, which represents a bias action. The third term on the right side is a constant term. In the QUBO format, as exemplified in FIG. 1, a good solution x for minimizing E(x) representing energy is searched for according to the following formula.

[Math. 1]

$$E(\boldsymbol{x}) = -\sum_{i,j} W_{ij} x_i x_j - \sum_i b_i x_i + \text{const.}$$

Here, an outline of the FMDA will be described as an example of the sampling technique using a model in the QUBO format. FIG. 2 illustrates, as an example, evaluation values of movies viewed by a large number of users. Those evaluation values are n-dimensional vectors. First, a model in the QUBO format for representing the interaction is created from those evaluation values. The model in the QUBO format may be expressed as in the following formula.

[Math. 2]

$$\hat{y}(\boldsymbol{x}^{(k)}) := w_0 + \sum_{i=1}^{n} w_i x_i^{(k)} + \sum_{i=1}^{n} \sum_{j=i+1}^{n} \langle \boldsymbol{v}_i, \boldsymbol{v}_j \rangle x_i^{(k)} x_j^{(k)}$$

In the formula set out above, $w_0$, $w_i$, $v_i$, and $v_j$ represent coefficients to be trained. This machine learning model is a model that is good at handling sparse data sets. Since this model is in the QUBO format, with the FM being trained, the model in the QUBO format may be automatically generated.

FIG. 3 is a flowchart illustrating an execution procedure in the sampling technique using a model in the QUBO format. As exemplified in FIG. 3, first, training data (initial point) is randomly generated to generate a training data group (step S1). The number of pieces of the training data to be generated is determined by a user setting.

Next, an evaluation value of the initial point is calculated using the solver (step S2). The evaluation value is an index for assessing whether or not the initial point or a recommended point to be described later is good. Through the above steps, an initial training data group is generated in which the initial points and the evaluation values are collected as sets.

Next, an FM is generated using the training data group, thereby creating a model in the QUBO format (step S3). Since the FM is in the QUBO format, generation of the FM is equivalent to generation of the model in the QUBO format. Any other machine learning model may be used as long as a model in the QUBO format may be generated.

Next, the created model in the QUBO format is optimized using a DA, and a good solution (DA recommended point) giving the best evaluation value is generated (step S4).

Next, an evaluation value of the DA recommended point is calculated using the solver (step S5).

Next, an evaluation result (set of the recommended point and the evaluation value) is added to the training data group as training data (step S6).

Next, it is determined whether or not the number of iterations has reached an upper limit (step S7). If it is determined as "No" in step S7, step S3 and the subsequent steps are executed again. Accordingly, steps S3 to S6 are repeated until an end condition is satisfied. If it is determined as "Yes" in step S7, the execution of the flowchart is terminated. Note that, as the end condition, a condition may be used such as a case where an amount of change in an objective function is less than a threshold over a certain period of time.

The training data group is updated according to the above procedure, whereby an optimal solution may be obtained.

Note that, while the FMDA has been described in FIG. 3, the DA part of the FMDA may be replaced with QA, and any other approach may be used as long as its Ising machine is capable of solving QUBO. Furthermore, the Ising model may be solved using software in addition to the case of using a dedicated Ising machine for solving the QUBO.

The sampling technique using a model in the QUBO format is an approach for sequentially sampling the recommended points in the model, and accordingly, a sampling region may be limited. Furthermore, according to the sampling technique using a model in the QUBO format, sampling performance may depend on the training data group for generating the model. Furthermore, since the FM is a quadratic model, the problem may not be fully expressed. Furthermore, it is difficult to adjust the number of recommendations when a plurality of approaches of recommendation is used. From the above, the number of times of sampling increases to enhance the accuracy in searching for an optimal solution.

In view of the above, it is conceivable to improve the search efficiency by using the penalty method. The penalty method is an approach of obtaining an approximate solution while avoiding constraint violation by, in a problem having a constraint condition, imposing a numerical penalty (deteriorating the objective function) when the constraint condition is violated. As an example, it is conceivable to use a one-way one-hot constraint to generate an initial point. FIG. 4 is a diagram for explaining an outline of the one-way one-hot constraint. As exemplified in FIG. 4, according to the one-way one-hot constraint, when $x_i$ and $x_j$ are expressed as a matrix, $x_i$ and $x_j$ are set such that only one state variable among variables of each row is 1.

However, when the one-way one-hot constraint is used, a solution violating the one-way one-hot constraint is generated during the solution search, and accordingly, the solution search efficiency may be deteriorated. As a result, the solution to be searched for may fall into a local solution. In view of the above, in the following embodiment, an exemplary case will be described in which, even when the one-way one-hot constraint is applied, the number of times of sampling may be reduced while avoiding the local solution.

[First Embodiment]

FIG. 5A is a block diagram exemplifying an overall configuration of an information processing device 100. As exemplified in FIG. 5A, the information processing device 100 includes a storage unit 10, an initial point generation unit 20, an evaluation unit 30, an FMDA execution unit 40, a genetic algorithm (GA) execution unit 50, a training data update unit 60, an output unit 70, and the like.

FIG. 5B is a block diagram exemplifying a hardware configuration of the information processing device 100. As exemplified in FIG. 5B, the information processing device 100 includes a central processing unit (CPU) 101, a random access memory (RAM) 102, a storage device 103, an input device 104, a display device 105, and the like.

The central processing unit (CPU) 101 is a central processing unit. The CPU 101 includes one or more cores. The random access memory (RAM) 102 is a volatile memory that temporarily stores a program to be executed by the CPU 101, data to be processed by the CPU 101, and the like. The storage device 103 is a nonvolatile storage device. As the storage device 103, for example, a read only memory (ROM), a solid state drive (SSD) such as a flash memory, a hard disk to be driven by a hard disk drive, or the like may be used. The storage device 103 stores an arithmetic program. The input device 104 is an input device such as a keyboard or a mouse. The display device 105 is a display device such as a liquid crystal display (LCD). The storage unit 10, the initial point generation unit 20, the evaluation unit 30, the FMDA execution unit 40, the GA execution unit 50, the training data update unit 60, the output unit 70, and the like are implemented by the CPU 101 executing the arithmetic program. Note that hardware such as a dedicated circuit may be used as the storage unit 10, the initial point generation unit 20, the evaluation unit 30, the FMDA execution unit 40, the GA execution unit 50, the training data update unit 60, the output unit 70, and the like.

FIG. 6 is a flowchart illustrating exemplary operation of the information processing device 100. As exemplified in FIG. 6, the initial point generation unit 20 generates initial points of training data to generate a training data group (step S11). The number of pieces of the training data to be generated is determined by a user setting.

FIG. 7 is a flowchart illustrating details of step S11. As exemplified in FIG. 7, the initial point generation unit 20 randomly generates initial points having integer information for the number of initial points (step S21). A user may generate an initial point having integer information. Next, the initial point generation unit 20 converts the initial point generated in step S21 into a bit array (step S22). Thereafter, the flowchart of FIG. 7 is terminated.

FIG. 8 is a diagram illustrating an example of steps S21 and S22. As exemplified in the upper left diagram of FIG. 8, one initial point is randomly generated in an integer array format. An index of a variable in the integer array is denoted by "i". Individual values of "i" are integers different from each other. For example, the individual values of "i" are integers arranged in order in a predetermined range. In the example of FIG. 8, the individual values of "i" are integers in the order from 1 to 10. An integer is generated as a variable under each "i". The integer in this case is one of the individual values of "i". Since each integer only needs to be one of the individual values of "i", two or more of the integers generated for the individual "i" may be the same integer. For example, all the integers generated for the individual "i" may be the same value. Alternatively, all the integers generated for the individual "i" may be values different from each other. An index representing a type of a variable is denoted by "j".

In the example of the upper left diagram of FIG. 8, an integer array arranged in the order from 1 to 10 is generated when "i" is arranged in the order from 1 to 10. This integer array is converted into a bit matrix as in the right diagram of FIG. 8. In the example of FIG. 8, when all combinations of (i, j) are expressed as a matrix with "i" as a row and "j" as a column, a case of i = j is expressed as "1", and a case of $i \neq j$ is expressed as "0". Since an array of integers having the same value is generated for each "i" in the example of FIG. 8, "1" is set in the case of (i, j) = (1, 1), (2, 2), (3, 3), (4, 4), (5, 5), (6, 6), (7, 7), (8, 8), (9, 9), (10, 10), and "0" is set in other cases. The obtained bit matrix is converted into a bit array as in the lower left diagram.

FIG. 9 is a diagram illustrating another example of steps S21 and S22. As exemplified in the upper left diagram of FIG. 9, one initial point is generated in the integer array format. In the example of the upper left diagram of FIG. 9, an integer array of "2, 1, 4, 3, 6, 5, 8, 7, 10, 10" is generated when "i" is arranged in the order from 1 to 10. This integer array is converted into a bit matrix as in the right diagram of FIG. 9. In this example, "1" is set in the case of (i, j) = (1, 2), (2, 1), (3, 4), (4, 3), (5, 6), (6, 5), (7, 8), (8, 7), (9, 10), (10, 10), and "0" is set in other cases. The obtained bit matrix is converted into a bit array as in the lower left diagram.

The initial points as described above are generated in the number determined by a user setting.

FIG. 6 is referred to again. Next, the evaluation unit 30 calculates an evaluation value of each initial point using the solver (step S12). The evaluation unit 30 calculates the evaluation value for the bit array generated with integers, and the obtained evaluation value is reflected in the column of the evaluation value in FIGs. 8 and 9. The initial training data group in which the initial points obtained in step S11 and the evaluation values calculated in step S12 are collected as sets is stored in the storage unit 10. Each of the individual training data groups is a set of integer information, bit array information, and an evaluation value.

Next, the FMDA execution unit 40 generates a DA recommended point, and the GA execution unit 50 generates a GA recommended point (step S13).

FIG. 10 is a flowchart illustrating details of step S13. As exemplified in FIG. 10, the FMDA execution unit 40 generates an FM from the training data group stored in the storage unit 10, thereby generating a model in the QUBO format (step S31). The FMDA execution unit 40 generates the FM using a bit array. Since the FM is in the QUBO format, generation of the FM is equivalent to generation of the model in the QUBO format. Any other machine learning model may be used as long as a model in the QUBO format may be generated.

Next, the FMDA execution unit 40 calculates a determination coefficient $R^2$ for the training data group of the FM model (step S32). The determination coefficient $R^2$ serves as an index of model accuracy, and indicates that the accuracy in searching for a good solution with a high evaluation value is higher as it gets closer to 1. The determination coefficient $R^2$ may be calculated by, for example, the following formula.

[Math. 3]

$$R^2 = 1 - \frac{\sum_{i=1}^{n}(y_i - \hat{y})^2}{\sum_{i=1}^{n}(y_i - \bar{y})^2}$$

In the above, yi denotes an actually measured value. The following formula yields a predicted value.

[Math. 4]

$$\hat{y}$$

The following formula yields an average value of actually measured values.

[Math. 5]

$$\bar{y}$$

Next, the FMDA execution unit 40 determines whether or not the determination coefficient $R^2$ is equal to or larger than a threshold $\delta$ (step S33). The threshold $\delta$ is preset by the user. Here, an example of the threshold $\delta$ will be described. For example, at a time of first execution of step S33, the threshold $\delta$ is set to approximately 0.8. It is preferable to decrease the value of the threshold $\delta$ when DA recommendation is working effectively, and to increase the value of the threshold $\delta$ when the DA recommendation is not working effectively. For example, whether or not the DA recommendation is working effectively may be determined based on whether or not a ratio determined as "Yes" in step S33 is equal to or larger than a threshold.

If it is determined as "Yes" in step S33, the FMDA execution unit 40 generates DA recommended points corresponding to the set number of DA recommendations by QUBO optimization based on the DA with a one-way one-hot constraint (step S34). The set number of DA recommendations is preset by the user. The DA recommended point is a good solution (recommended point) giving the best evaluation value. Alternatively, the DA recommended point is a good solution (recommended point) having an evaluation value equal to or larger than a threshold. Alternatively, the DA recommended points are good solutions (recommended points) having top evaluation values up to a predetermined place. Note that, according to the DA with the one-way one-hot constraint, a search may be carried out while avoiding constraint violation by utilizing a constraint condition at a time of selecting an inversion bit and simultaneously inverting two bits at a time of one-way one-hot.

Thereafter, the GA execution unit 50 sets the number of GA recommendations as the set number of GA recommendations (step S35).

If it is determined as "No" in step S33, the GA execution unit 50 sets the number of GA recommendations to (set number of GA recommendations + set number of DA recommendations) (step S36). The set number of GA recommendations is preset by the user. Note that the number of GA recommendations may not be the (set number of GA recommendations + set number of DA recommendations), and only needs to be a number larger than the number of GA recommendations.

After step S35 is performed or after step S36 is performed, the GA execution unit 50 selects parent individuals corresponding to the number of GA recommendations from the training data group stored in the storage unit 10 (step S37). A method of selecting the parent individuals is not particularly limited, and for example, a method is exemplified in which individuals corresponding to the number (tournament size $N_T$) exceeding the number of GA recommendations are randomly extracted from the training data group and highly evaluated individuals corresponding to the number of GA recommendations are selected among them (tournament selection). Alternatively, individuals corresponding to the number of GA recommendations with the highest evaluation may be selected from the training data group (elite selection). The tournament size $N_T$ is preset by the user.

Next, the GA execution unit 50 generates child individuals (GA recommended points) corresponding to the number of GA recommendations from the parent individuals by crossover and mutation of the integer type GA (step S38). In this case, the GA execution unit 50 uses information regarding an integer array included in each piece of training data.

FIG. 11A is a diagram exemplifying crossover. For example, one or more elements "j" of the same "i" are set as crossover points for a parent individual A and a parent individual B. Next, the crossover points of the parent individual A and the crossover points of the parent individual B are exchanged. FIG. 11B is a diagram exemplifying mutation. First, two "i" are randomly selected. Next, elements "j" of the selected two "i" are exchanged. Note that the crossover probability and the mutation probability are preset by the user.

FIG. 10 is referred to again. The GA execution unit 50 convers integer information regarding the GA recommended points generated in step S38 into a bit array as described with reference to FIGs. 8 and 9 (step S39).

Next, the GA execution unit 50 determines whether or not the recommended point obtained in step S39 is a point that has already been retrieved in search (step S40).

If it is determined as "No" in step S40, the retrieved recommended points are excluded, and the number of deleted pieces is set as the number of GA recommendations (step S41). Thereafter, step S37 and the subsequent steps are executed again. As a result, the GA recommended points may be generated by excluding the retrieved recommended points. If it is determined as "Yes" in step S40, the flowchart of FIG. 10 is terminated.

FIG. 6 is referred to again. Next, the evaluation unit 30 calculates an evaluation value of the recommended point using the solver (step S14). The recommended point here indicates a DA recommended point and a GA recommended point if step S36 is performed, and indicates a GA recommended point if step S35 is performed.

Next, the training data update unit 60 adds, to the training data group, an evaluation result (set of the recommended point and the evaluation value) as training data (step S15). Each of the individual training data groups is a set of integer information, bit array information, and an evaluation value.

Next, the training data update unit 60 determines whether or not the number of pieces of training data in the training data group exceeds an upper limit number (step S16). The upper limit number of the number of pieces of training data is preset by the user.

If it is determined as "Yes" in step S16, the training data update unit 60 selects the upper limit number of pieces of training data in descending order of the evaluation value, and deletes training data other than the selected training data (step S17). In addition, the training data update unit 60 may select training data having an evaluation value equal to or larger than a predetermined value, and may delete training data other than the selected training data.

If it is determined as "No" in step S16, or after step S17 is performed, the FMDA execution unit 40 determines whether or not the number of iterations has reached an upper limit (step S18). Note that it is sufficient if the number of times of execution of step S18 is treated as the number of iterations. The upper limit number of the number of iterations is preset by the user.

If it is determined as "No" in step S18. step S13 and the subsequent steps are executed again. If it is determined as "Yes" in step S18, the execution of the flowchart is terminated.

The output unit 70 outputs a result of the process of FIG. 6. For example, the output result is displayed on the display device 105. For example, the output unit 70 may output the contents of the training data group, or may output, as a good solution, training data having a higher evaluation value in the training data group.

FIG. 12 is a diagram summarizing processing of the present embodiment. As exemplified in FIG. 12, an initial point is randomly generated in an integer format. Next, the generated initial point is converted into a bit array, thereby being converted into a format satisfying the one-way one-hot constraint. Furthermore, an evaluation value is calculated for each piece of training data. A training data set including the obtained integer array and evaluation value is stored.

Next, QUBO is generated by machine learning as in the following formula.

[Math. 6]

$$H = \sum_{i=1}^{N} \sum_{j=1}^{N} Q_{ij} x_i x_j$$

Next, the one-way one-hot constraint is set at the time of the DA solution search, and an optimum value of the FM model (QUBO) that satisfies the one-way one-hot constraint is searched. As a result, the DA recommended point satisfies the one-way one-hot constraint.

Meanwhile, training data is treated as a population, and a recommended point is generated using integer type GA processing (selection, crossover, and mutation). Since the GA recommended point is integer information, the GA recommended point is converted into a bit array after the generation. According to the integer individual representation, the recommended point satisfies the one-way one-hot constraint.

According to the present embodiment, the set number of DA recommendations and the set number of GA recommendations are determined according to the accuracy of the FM model generated from the training data group. As a result, both high accuracy for obtaining a good solution and reduction in the number of times of sampling may be achieved.

For example, when the accuracy of the FM model generated from the training data is low, the accuracy in searching for a good solution with the DA may be lowered. Thus, the number of GA recommendations is increased without performing the DA recommendation. With the GA used, the training data may be treated as a population, and a recommended point may be generated using the GA processing. As a result, a region where the evaluation value is likely to be higher may be sampled in a wide range. In this case, the DA recommendation with lower accuracy is not performed, and as a result, a good solution may be obtained with higher accuracy and with a smaller number of times of sampling.

For example, when the accuracy of the FM model generated from the training data group is high, a good solution in the FM model may be generated as a recommended point by the DA. In this case, a region with a higher evaluation value may be actively sampled. As a result, the number of times of sampling for obtaining a good solution may be reduced.

As described above, according to the present embodiment, both the high accuracy for obtaining a good solution and the reduction in the number of times of sampling may be achieved.

Furthermore, according to the present embodiment, the initial point is generated in the integer array format, whereby the training data group in the format satisfying the one-way one-hot constraint may be generated. With the constraint satisfying the one-way one-hot constraint provided at the time of the DA optimization, the one-way one-hot constraint may be satisfied. Moreover, with the integer type GA used at the time of the GA optimization, the training data group in the format satisfying the one-way one-hot constraint may be generated. From the above, the one-way one-hot constraint may be satisfied, and falling into a local solution may be suppressed at the time of optimization.

Furthermore, when the number of pieces of data of the training data group exceeds the upper limit number, the training data group is updated according to the evaluation value of each piece of the training data included in the training data group, whereby the accuracy in modeling used for the sampling may be improved.

Note that it is also conceivable to provide a two-way one-hot constraint to generate an initial point. However, the two-way one-hot constraint has a tendency to impose a larger number of constraints in the initial point generation and the optimal solution search. On the other hand, according to the one-way one-hot constraint, the number of constraints in the initial point generation and the optimal solution search is smaller than that of the two-way one-hot constraint. As a result, the sampling region is widened, and falling into a local solution may be more easily avoided. For example, the one-way one-hot constraint is particularly effective in optimization of discrete variables, and is particularly effective for a problem with a plurality of types of possible variables.

(Simulation Result)

Hereinafter, a simulation result of setting a virtual problem and performing the arithmetic processing according to the above-described embodiment will be described. FIG. 13 is a diagram exemplifying a test problem. In this test problem, a degree of deviation between a target integer array and a solution is set as a score. In the example of FIG. 13, target values are determined for four indexes v0, v1, v2, and v3. Three of evaluation points of v0, v1, v2, and v3 of a certain solution are different from the target values. Since the number of those pieces is set as the degree of deviation, a score value E is 3 in the example of FIG. 13.

With regard to this test problem, sampling was performed in two types including FMDA using the penalty method and the approach according to the present embodiment. The number of variables was set to 25, and the number of bits used was set to 530 as common settings. By setting the number of initial points to 160, the number of initial points was made smaller than the used bits. It was set as $v_0 \in \{0, 1, ..., 50\}$, and other $v_1, v_2, ..., v_{24} \in \{0, 1, ..., 20\}$.

Note that, in the FMDA using the penalty method, the following formula was applied to the test problem of FIG. 13. Note that $N_{bit}$ represents the number of bits used, and $x_{ij} \in \{0, 1\}$ is set. It was set as $\alpha = 5/N_{bit}$, $\beta = 1$, and $C = Nv$. The penalty term has a positive value in a case of constraint violation.

[Math. 7]

$$E' = \begin{cases} E, \text{ if one-way one-hot constraint is satisfied} \\ \alpha\left(\sum_i \left|\sum_j x_{ij} - 1\right|^\beta + \sum_j \left|\sum_i x_{ij} - 1\right|^\beta\right) + C, else \end{cases}$$

FIG. 14 is a diagram illustrating a best value found through a search. The vertical axis represents energy E in the QUBO format. Therefore, in the vertical axis, a smaller value indicates that a better result is obtained. The number of analyses on the horizontal axis indicates the number of iterations. As illustrated in FIG. 14, it may be seen that an optimal solution may be found with a smaller number of analyses in the present embodiment.

FIG. 15A is a diagram illustrating details of a result of an approach using only FM-DA. In FIG. 15A, the evaluation value (energy E) of each obtained solution is plotted. As illustrated in FIG. 15A, it may be seen that the FM-DA converges to a local solution. This is considered to be because a large number of points of constraint violation have occurred in the penalty method.

On the other hand, FIG. 15B is a diagram illustrating details of a result of the approach according to the present embodiment. As illustrated in FIG. 15B, in the present embodiment, optimization may be searched with a smaller number of analyses. This is considered to be because constraint violation during the search may have been avoided.

In the example described above, the initial point generation unit 20 is an exemplary initial point generation unit that generates a plurality of types of integer arrays as initial points of individual pieces of training data in the training data group. The FMDA execution unit 40 and the GA execution unit 50 are an exemplary execution unit that searches for a first recommended point by providing a constraint in which, when the first recommended point is retrieved, an index of a variable in the integer array is set to i and an index that represents a type of the variable is set to j for each piece of the training data, a case of i = j in the integer array in a matrix of i and j is set to 1 and another case is set to 0 to perform conversion into a bit array of i and j, and only one variable in each row is 1 in the matrix, and applies a genetic algorithm to the integer array format when the second recommended point is retrieved.

While the embodiment has been described above in detail, the embodiment is not limited to such a particular embodiment, and various modifications and alterations may be made within the scope of the gist of the embodiment described in the claims.

## Claims

**1.** An arithmetic program for causing a computer to execute a process comprising:

when arithmetic processing is repeatedly performed in which an Ising model is created based on a training data group, a first recommended point that corresponds to a first set number is retrieved for the Ising model, a second recommended point that corresponds to a second set number is retrieved for the training data group by genetic algorithm, and each set of the first recommended point and a first evaluation value of the first recommended point and the second recommended point and a second evaluation value of the second recommended point is added to the training data group as training data,
generating an integer array of a plurality of types as an initial point of each piece of the training data of the training data group;
searching for the first recommended point by providing a constraint in which, when the first recommended point is retrieved, an index of a variable in the integer array is set to i and an index that represents a type of the variable is set to j for each piece of the training data, a case of i = j in the integer array in a matrix of i and j is set to 1 and another case is set to 0 to perform conversion into a bit array of i and j, and only one variable in each row is 1 in the matrix; and
applying the genetic algorithm to a format of the integer array when the second recommended point is retrieved.

**2.** The arithmetic program according to claim 1, the program causing the computer to execute the process further comprising:
searching for another piece of the second recommended point when the retrieved second recommended point is included in the training data group.

**3.** The arithmetic program according to claim 1, the program causing the computer to execute the process further comprising:
determining the first set number and the second set number according to accuracy of the Ising model.

**4.** The arithmetic program according to claim 3, the program causing the computer to execute the process further comprising:
when the accuracy of the Ising model is lower than a threshold, increasing the second set number and searching for the second recommended point without searching for the first recommended point.

**5.** The arithmetic program according to claim 3, the program causing the computer to execute the process further comprising:
when the accuracy of the Ising model is lower than the threshold, setting the second set number to a sum of the first set number and the second set number and searching for the second recommended point without searching for the first recommended point.

**6.** The arithmetic program according to claim 3, the program causing the computer to execute the process further comprising:

when the accuracy of the Ising model is equal to or higher than the threshold, searching for the first recommended point and the second recommended point without changing the first set number and the second set number.

**7.** The arithmetic program according to claim 1, wherein an upper limit is set for a number of pieces of the training data in the training data group,
the program causing the computer to execute the process further comprising:
when the number of pieces of the training data in the training data group exceeds the upper limit, updating the training data group according to an evaluation value of each piece of the training data.

**8.** The arithmetic program according to claim 7, the program causing the computer to execute the process further comprising:
when the number of pieces of the training data in the training data group exceeds the upper limit, leaving the training data that corresponds to a number the upper limit of pieces in the training data group in descending order of the evaluation value and deleting other pieces of the training data.

**9.** An arithmetic program for causing a computer to execute a process comprising:

when arithmetic processing is repeatedly performed in which an Ising model is created based on a training data group, a first recommended point that corresponds to a first set number is retrieved for the Ising model, a second recommended point that corresponds to a second set number is retrieved for the training data group by genetic algorithm, and each set of the first recommended point and a first evaluation value of the first recommended point and the second recommended point and a second evaluation value of the second recommended point is added to the training data group as training data,
generating an integer array of a plurality of types as an initial point of each piece of the training data of the training data group;
searching for the first recommended point by providing a constraint in which, when the first recommended point is retrieved, an index of a variable in the integer array is set to i and an index that represents a type of the variable is set to j for each piece of the training data, a case of i = j in the integer array in a matrix of i and j is set to 1 and another case is set to 0 to perform conversion into a bit array of i and j, and only one variable in each row is 1 in the matrix; and
applying the genetic algorithm to a format of the integer array when the second recommended point is retrieved.

**10.** The arithmetic method according to claim 9, the program causing the computer to execute the process further comprising:
searching for another piece of the second recommended point when the retrieved second recommended point is included in the training data group.

**11.** The arithmetic method according to claim 9, the program causing the computer to execute the process further comprising:
determining the first set number and the second set number according to accuracy of the Ising model.

**12.** The arithmetic method according to claim 11, the program causing the computer to execute the process further comprising:
when the accuracy of the Ising model is lower than a threshold, increasing the second set number and searching for the second recommended point without searching for the first recommended point.

**13.** The arithmetic method according to claim 11, the program causing the computer to execute the process further comprising:
when the accuracy of the Ising model is lower than the threshold, setting the second set number to a sum of the first set number and the second set number and searching for the second recommended point without searching for the first recommended point.

**14.** The arithmetic method according to claim 11, the program causing the computer to execute the process further comprising:
when the accuracy of the Ising model is equal to or higher than the threshold, searching for the first recommended point and the second recommended point without changing the first set number and the second set number.

**15.** An information processing device comprising:

an initial point generation unit configured to generate, when arithmetic processing is repeatedly performed in which an Ising model is created based on a training data group, a first recommended point that corresponds to a first set number is retrieved for the Ising model, a second recommended point that corresponds to a second set number is retrieved for the training data group by genetic algorithm, and each set of the first recommended point and a first evaluation value of the first recommended point and the second recommended point and a second evaluation value of the second recommended point is added to the training data group as training data, an integer array of a plurality of types as an initial point of each piece of the training data of the training data group; and

an execution unit configured to search for the first recommended point by providing a constraint in which, when the first recommended point is retrieved, an index of a variable in the integer array is set to i and an index that represents a type of the variable is set to j for each piece of the training data, a case of i = j in the integer array in a matrix of i and j is set to 1 and another case is set to 0 to perform conversion into a bit array of i and j, and only one variable in each row is 1 in the matrix and apply the genetic algorithm to a format of the integer array when the second recommended point is retrieved.

FIG. 1

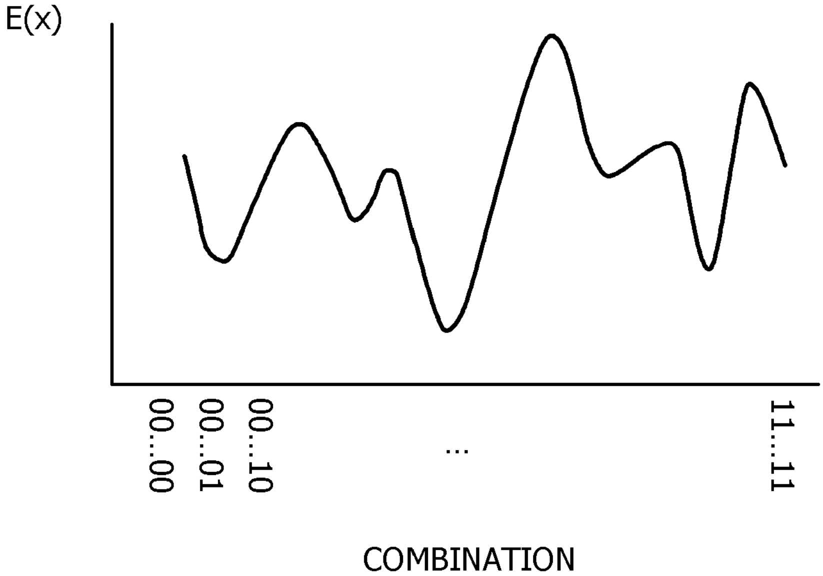

FIG. 2

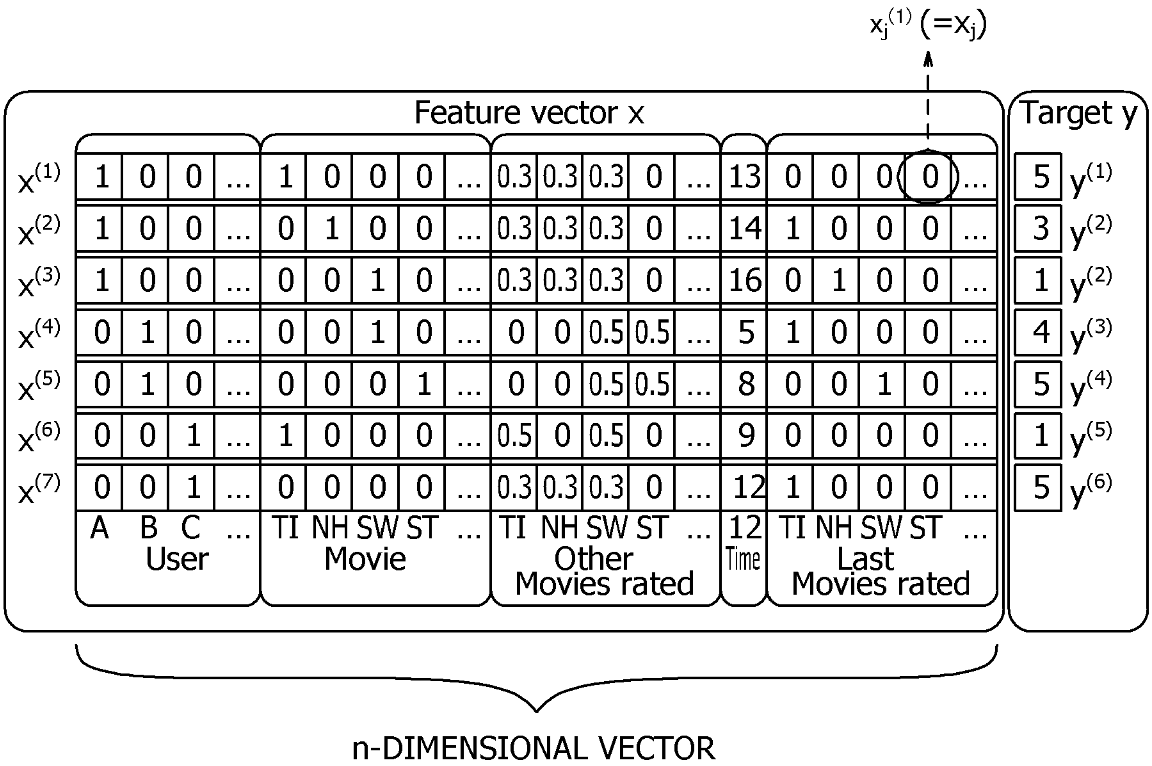

xj(1) (=xj)
Feature vector x
Target y
x(1) 1 0 0 ... 1 0 0 0 ... 0.3 0.3 0.3 0 ... 13 0 0 0 0 ... 5 y(1)
x(2) 1 0 0 ... 0 1 0 0 ... 0.3 0.3 0.3 0 ... 14 1 0 0 0 ... 3 y(2)
x(3) 1 0 0 ... 0 0 1 0 ... 0.3 0.3 0.3 0 ... 16 0 1 0 0 ... 1 y(2)
x(4) 0 1 0 ... 0 0 1 0 ... 0 0 0.5 0.5 ... 5 1 0 0 0 ... 4 y(3)
x(5) 0 1 0 ... 0 0 0 1 ... 0 0 0.5 0.5 ... 8 0 0 1 0 ... 5 y(4)
x(6) 0 0 1 ... 1 0 0 0 ... 0.5 0 0.5 0 ... 9 0 0 0 0 ... 1 y(5)
x(7) 0 0 1 ... 0 0 0 0 ... 0.3 0.3 0.3 0 ... 12 1 0 0 0 ... 5 y(6)
A B C ... TI NH SW ST ... TI NH SW ST ... 12 TI NH SW ST ...
User
Movie
Other Movies rated
Time
Last Movies rated
n-DIMENSIONAL VECTOR

FIG. 3

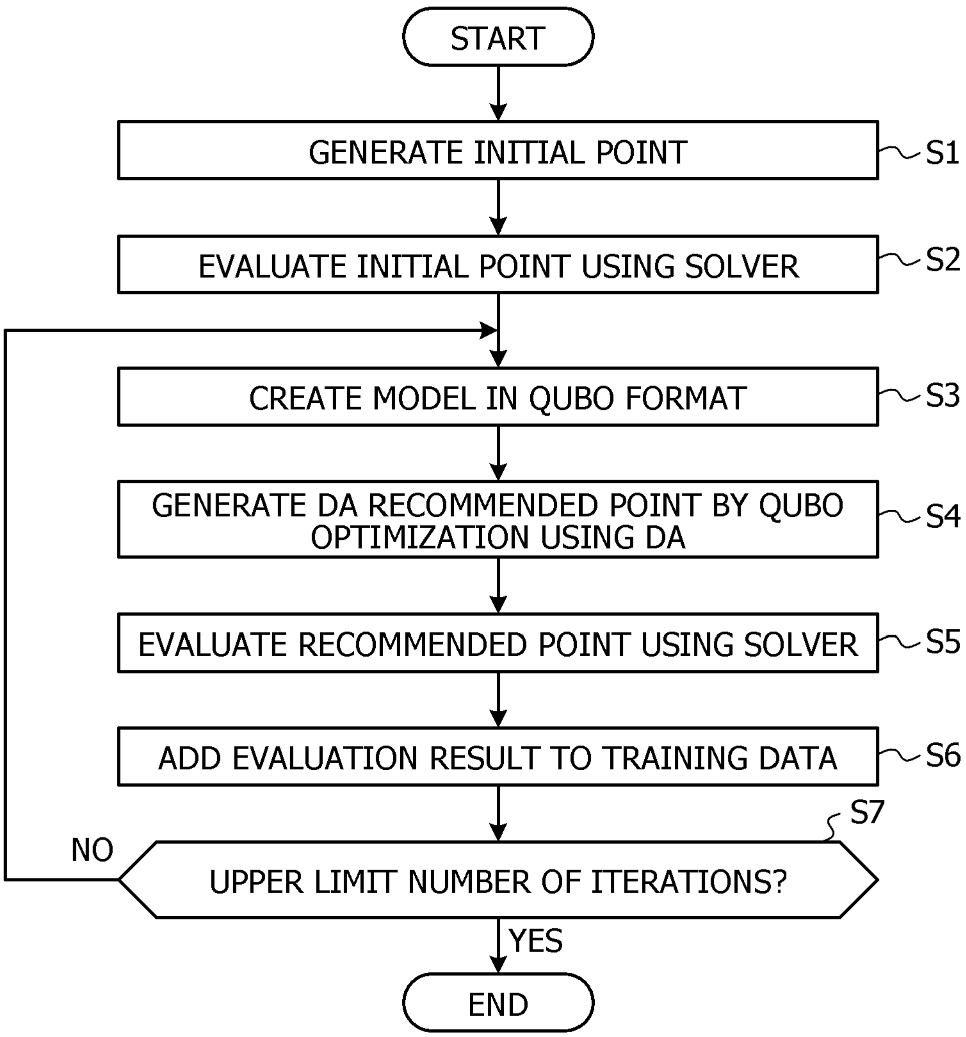
START
GENERATE INITIAL POINT
S1
EVALUATE INITIAL POINT USING SOLVER
S2
CREATE MODEL IN QUBO FORMAT
S3
GENERATE DA RECOMMENDED POINT BY QUBO OPTIMIZATION USING DA
S4
EVALUATE RECOMMENDED POINT USING SOLVER
S5
ADD EVALUATION RESULT TO TRAINING DATA
S6
S7
UPPER LIMIT NUMBER OF ITERATIONS?
NO
YES
END

FIG. 4

$x_{ij}$

j

i

| | 1 | 2 | 3 | 4 | 5 | 6 | 7 | 8 | 9 | 10 | TOTAL |
|---|---|---|---|---|---|---|---|---|---|---|---|
| 1 | 1 | 0 | 0 | 0 | 0 | 0 | 0 | 0 | 0 | 0 | 1 |
| 2 | 0 | 1 | 0 | 0 | 0 | 0 | 0 | 0 | 0 | 0 | 1 |
| 3 | 0 | 0 | 1 | 0 | 0 | 0 | 0 | 0 | 0 | 0 | 1 |
| 4 | 0 | 0 | 0 | 1 | 0 | 0 | 0 | 0 | 0 | 0 | 1 |
| 5 | 0 | 0 | 0 | 0 | 1 | 0 | 0 | 0 | 0 | 0 | 1 |
| 6 | 0 | 0 | 0 | 0 | 0 | 1 | 0 | 0 | 0 | 0 | 1 |
| 7 | 0 | 0 | 0 | 0 | 0 | 0 | 1 | 0 | 0 | 0 | 1 |
| 8 | 0 | 0 | 0 | 0 | 0 | 0 | 0 | 1 | 0 | 0 | 1 |
| 9 | 0 | 0 | 0 | 0 | 0 | 0 | 0 | 0 | 1 | 0 | 1 |
| 10 | 0 | 0 | 0 | 0 | 0 | 0 | 0 | 0 | 0 | 1 | 1 |

FIG. 5A

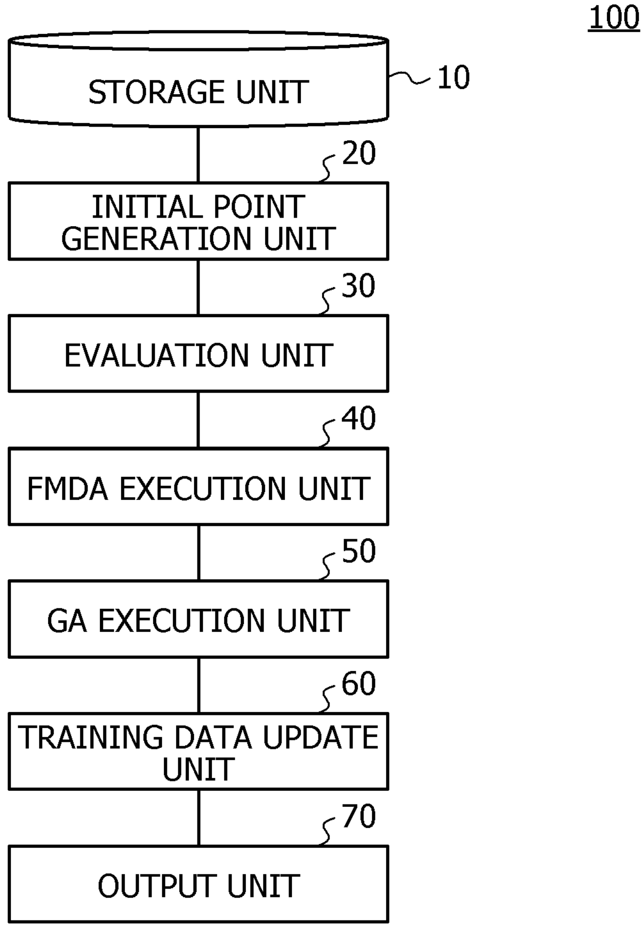
100
STORAGE UNIT
10
20
INITIAL POINT GENERATION UNIT
30
EVALUATION UNIT
40
FMDA EXECUTION UNIT
50
GA EXECUTION UNIT
60
TRAINING DATA UPDATE UNIT
70
OUTPUT UNIT

FIG. 5B

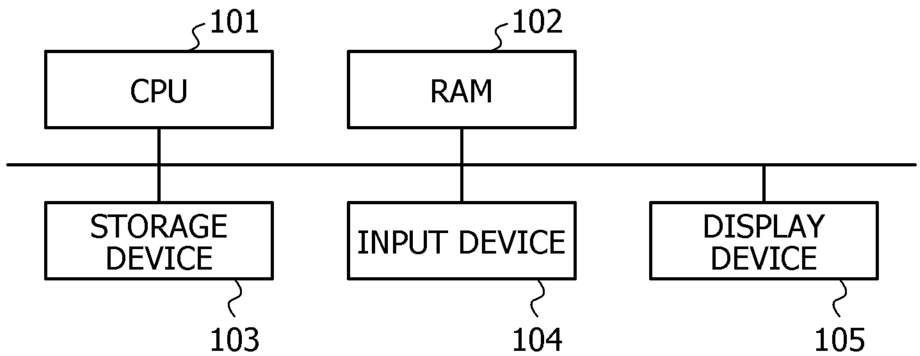
101
CPU
102
RAM
STORAGE DEVICE
INPUT DEVICE
DISPLAY DEVICE
103
104
105

FIG. 6

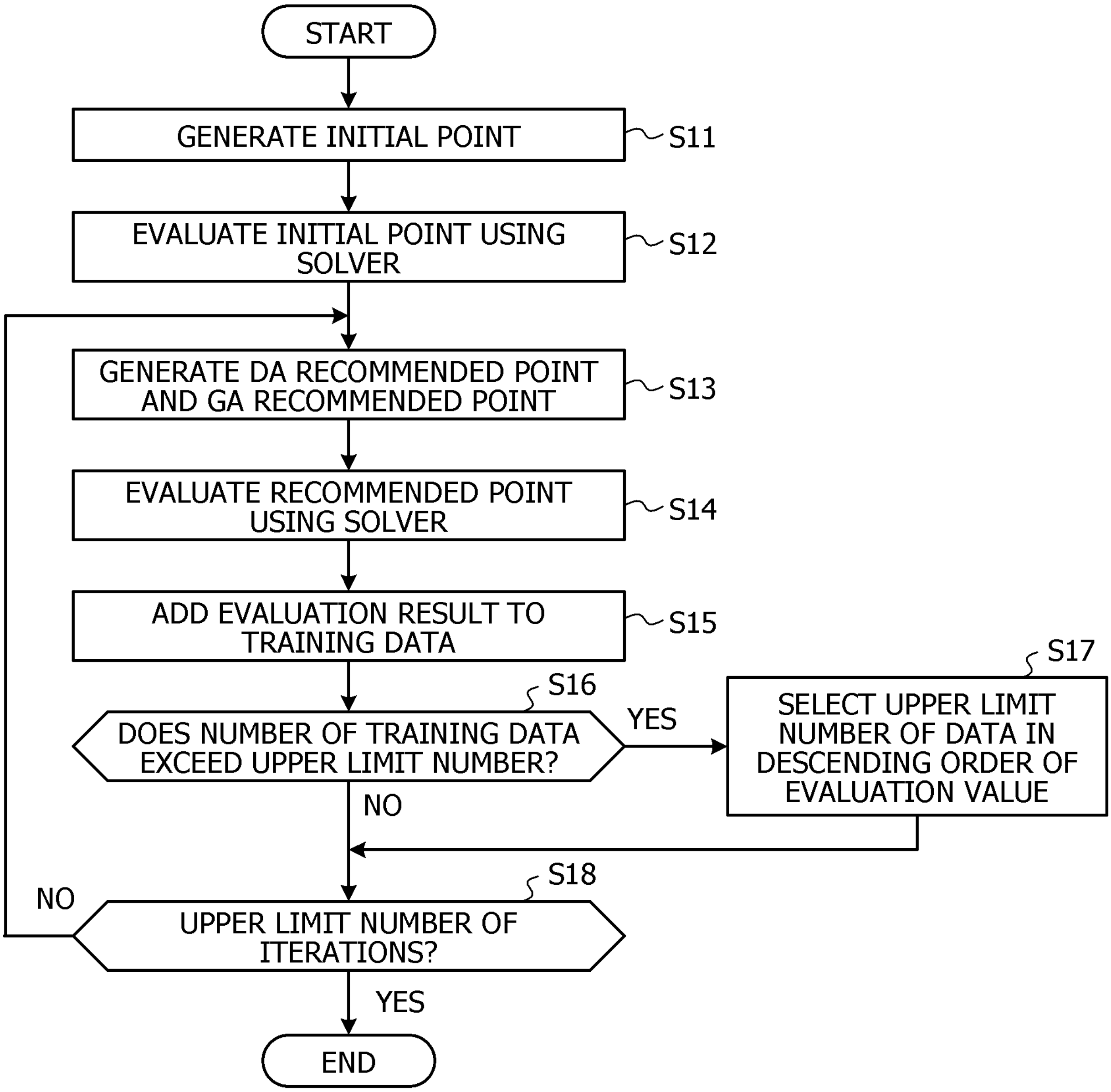
START
GENERATE INITIAL POINT
S11
EVALUATE INITIAL POINT USING SOLVER
S12
GENERATE DA RECOMMENDED POINT AND GA RECOMMENDED POINT
S13
EVALUATE RECOMMENDED POINT USING SOLVER
S14
ADD EVALUATION RESULT TO TRAINING DATA
S15
S16
DOES NUMBER OF TRAINING DATA EXCEED UPPER LIMIT NUMBER?
YES
S17
SELECT UPPER LIMIT NUMBER OF DATA IN DESCENDING ORDER OF EVALUATION VALUE
NO
S18
NO
UPPER LIMIT NUMBER OF ITERATIONS?
YES
END

FIG. 7

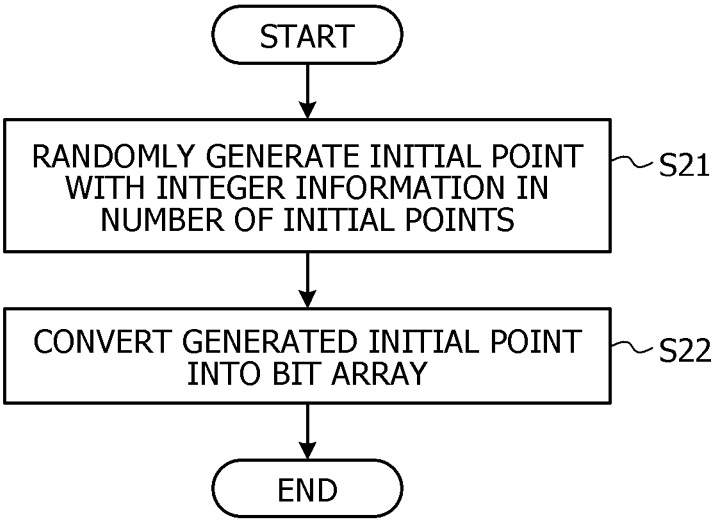
START
RANDOMLY GENERATE INITIAL POINT WITH INTEGER INFORMATION IN NUMBER OF INITIAL POINTS
S21
CONVERT GENERATED INITIAL POINT INTO BIT ARRAY
S22
END

FIG. 8

i

| No. | EVALUATION VALUE | 1 | 2 | 3 | 4 | 5 | 6 | 7 | 8 | 9 | 10 |
|---|---|---|---|---|---|---|---|---|---|---|---|
| 1 | xxx | 1 | 2 | 3 | 4 | 5 | 6 | 7 | 8 | 9 | 10 |

INTEGER

$x_{ij}$ j

| i | 1 | 2 | 3 | 4 | 5 | 6 | 7 | 8 | 9 | 10 | TOTAL |
|---|---|---|---|---|---|---|---|---|---|---|---|
| 1 | 1 | 0 | 0 | 0 | 0 | 0 | 0 | 0 | 0 | 0 | 1 |
| 2 | 0 | 1 | 0 | 0 | 0 | 0 | 0 | 0 | 0 | 0 | 1 |
| 3 | 0 | 0 | 1 | 0 | 0 | 0 | 0 | 0 | 0 | 0 | 1 |
| 4 | 0 | 0 | 0 | 1 | 0 | 0 | 0 | 0 | 0 | 0 | 1 |
| 5 | 0 | 0 | 0 | 0 | 1 | 0 | 0 | 0 | 0 | 0 | 1 |
| 6 | 0 | 0 | 0 | 0 | 0 | 1 | 0 | 0 | 0 | 0 | 1 |
| 7 | 0 | 0 | 0 | 0 | 0 | 0 | 1 | 0 | 0 | 0 | 1 |
| 8 | 0 | 0 | 0 | 0 | 0 | 0 | 0 | 1 | 0 | 0 | 1 |
| 9 | 0 | 0 | 0 | 0 | 0 | 0 | 0 | 0 | 1 | 0 | 1 |
| 10 | 0 | 0 | 0 | 0 | 0 | 0 | 0 | 0 | 0 | 1 | 1 |

i-j

| No. | EVALUATION VALUE | 1,1 | 1,2 | 1,3 | ... | 10,8 | 10,8 | 10,10 |
|---|---|---|---|---|---|---|---|---|
| 1 | xxx | 1 | 0 | 0 | ... | 0 | 0 | 1 |

BIT ARRAY

FIG. 9

i

| No. | EVALUATION VALUE | 1 | 2 | 3 | 4 | 5 | 6 | 7 | 8 | 9 | 10 |
|---|---|---|---|---|---|---|---|---|---|---|---|
| 2 | yyy | 2 | 1 | 4 | 3 | 6 | 5 | 8 | 7 | 10 | 10 |

INTEGER

$x_{ij}$ j

| i | 1 | 2 | 3 | 4 | 5 | 6 | 7 | 8 | 9 | 10 | TOTAL |
|---|---|---|---|---|---|---|---|---|---|---|---|
| 1 | 0 | 1 | 0 | 0 | 0 | 0 | 0 | 0 | 0 | 0 | 1 |
| 2 | 1 | 0 | 0 | 0 | 0 | 0 | 0 | 0 | 0 | 0 | 1 |
| 3 | 0 | 0 | 0 | 1 | 0 | 0 | 0 | 0 | 0 | 0 | 1 |
| 4 | 0 | 0 | 1 | 0 | 0 | 0 | 0 | 0 | 0 | 0 | 1 |
| 5 | 0 | 0 | 0 | 0 | 0 | 1 | 0 | 0 | 0 | 0 | 1 |
| 6 | 0 | 0 | 0 | 0 | 1 | 0 | 0 | 0 | 0 | 0 | 1 |
| 7 | 0 | 0 | 0 | 0 | 0 | 0 | 0 | 1 | 0 | 0 | 1 |
| 8 | 0 | 0 | 0 | 0 | 0 | 0 | 1 | 0 | 0 | 0 | 1 |
| 9 | 0 | 0 | 0 | 0 | 0 | 0 | 0 | 0 | 0 | 1 | 1 |
| 10 | 0 | 0 | 0 | 0 | 0 | 0 | 0 | 0 | 0 | 1 | 1 |

i-j

| No. | EVALUATION VALUE | 1,1 | 1,2 | 1,3 | ... | 10,8 | 10,8 | 10,10 |
|---|---|---|---|---|---|---|---|---|
| 2 | xxx | 0 | 1 | 0 | ... | 0 | 0 | 1 |

BIT ARRAY

FIG. 10

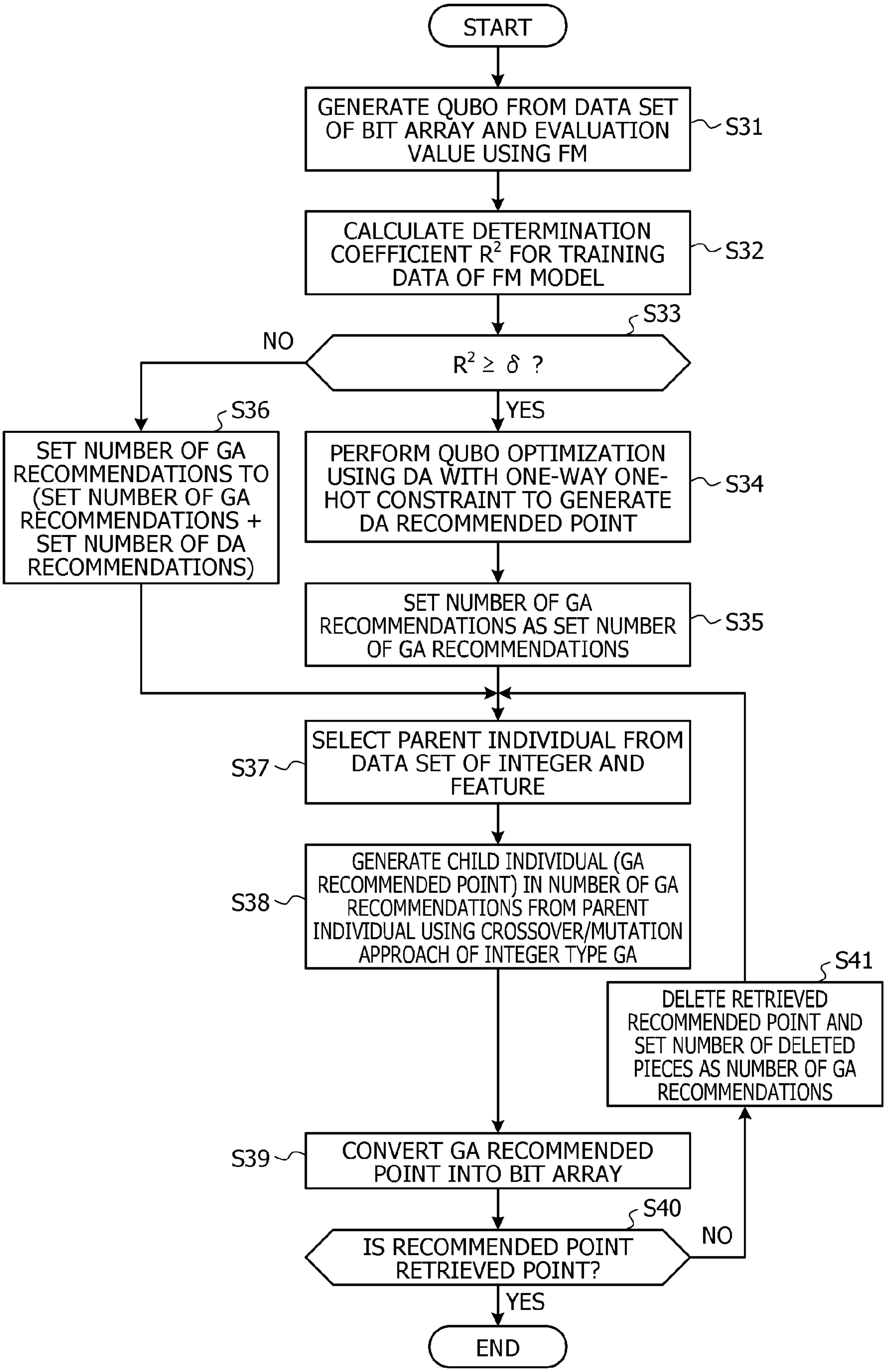
START
GENERATE QUBO FROM DATA SET OF BIT ARRAY AND EVALUATION VALUE USING FM
S31
CALCULATE DETERMINATION COEFFICIENT $R^2$ FOR TRAINING DATA OF FM MODEL
S32
S33
$R^2 \geq \delta$ ?
NO
YES
S36
SET NUMBER OF GA RECOMMENDATIONS TO (SET NUMBER OF GA RECOMMENDATIONS + SET NUMBER OF DA RECOMMENDATIONS)
PERFORM QUBO OPTIMIZATION USING DA WITH ONE-WAY ONE-HOT CONSTRAINT TO GENERATE DA RECOMMENDED POINT
S34
SET NUMBER OF GA RECOMMENDATIONS AS SET NUMBER OF GA RECOMMENDATIONS
S35
S37
SELECT PARENT INDIVIDUAL FROM DATA SET OF INTEGER AND FEATURE
S38
GENERATE CHILD INDIVIDUAL (GA RECOMMENDED POINT) IN NUMBER OF GA RECOMMENDATIONS FROM PARENT INDIVIDUAL USING CROSSOVER/MUTATION APPROACH OF INTEGER TYPE GA
S41
DELETE RETRIEVED RECOMMENDED POINT AND SET NUMBER OF DELETED PIECES AS NUMBER OF GA RECOMMENDATIONS
S39
CONVERT GA RECOMMENDED POINT INTO BIT ARRAY
S40
IS RECOMMENDED POINT RETRIEVED POINT?
NO
YES
END

FIG. 11A

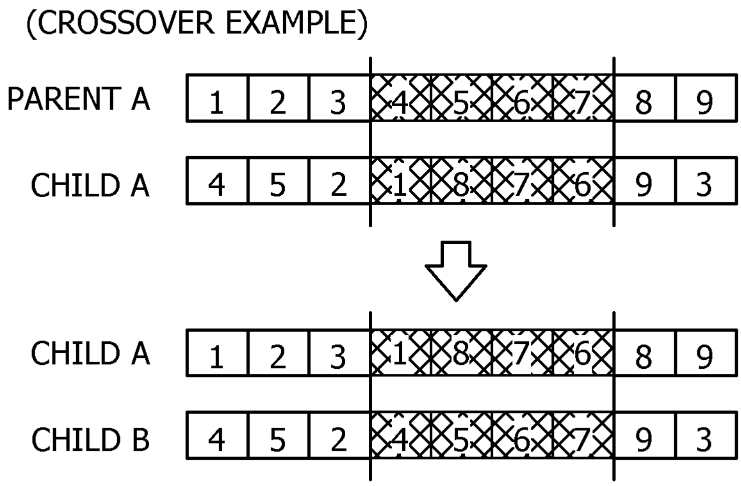


FIG. 11B

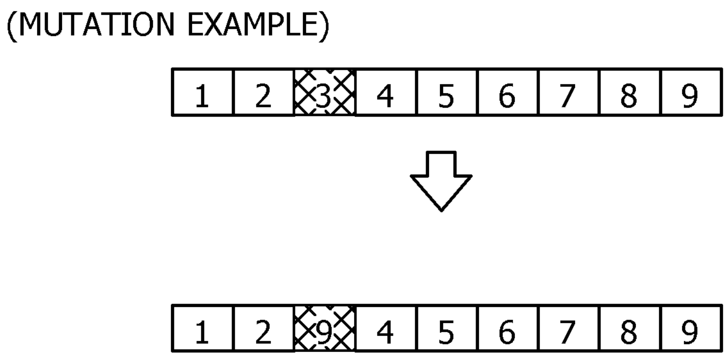

FIG. 12

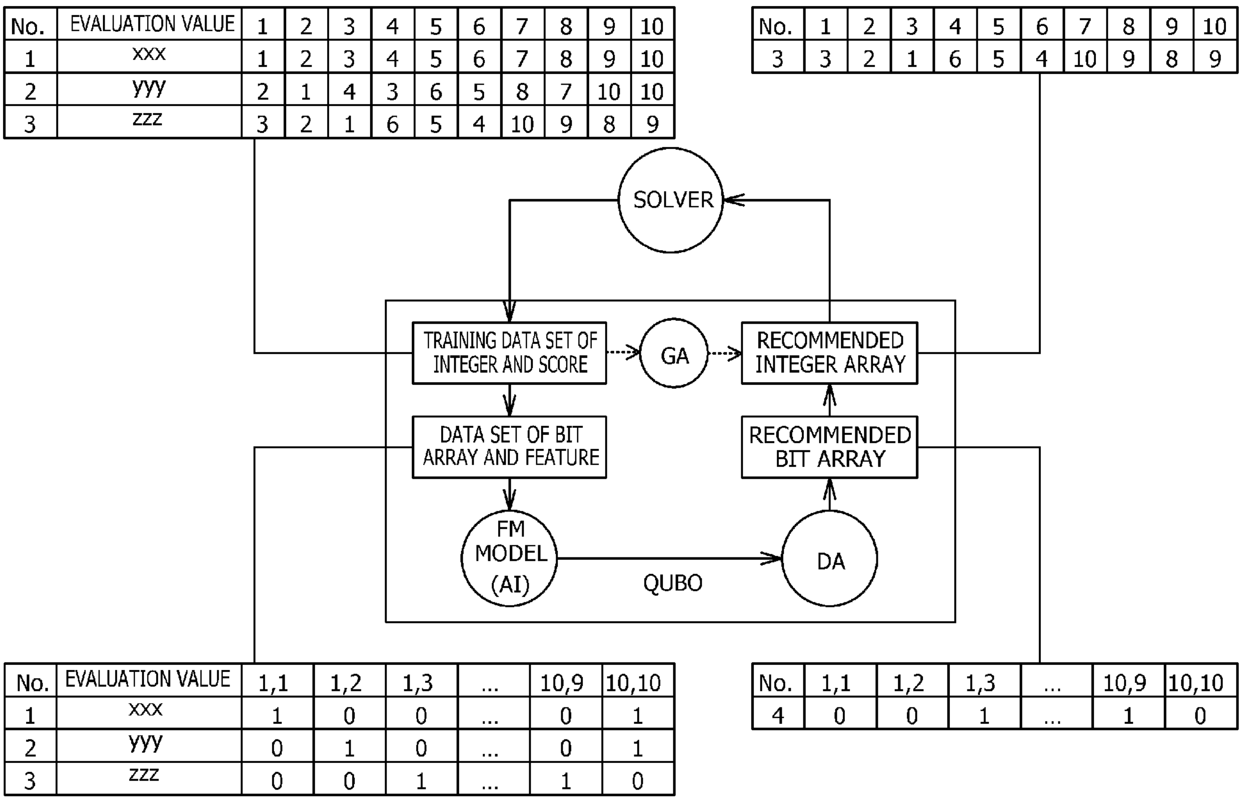


| No. | EVALUATION VALUE | 1 | 2 | 3 | 4 | 5 | 6 | 7 | 8 | 9 | 10 |
|---|---|---|---|---|---|---|---|---|---|---|---|
| 1 | xxx | 1 | 2 | 3 | 4 | 5 | 6 | 7 | 8 | 9 | 10 |
| 2 | yyy | 2 | 1 | 4 | 3 | 6 | 5 | 8 | 7 | 10 | 10 |
| 3 | zzz | 3 | 2 | 1 | 6 | 5 | 4 | 10 | 9 | 8 | 9 |

| No. | 1 | 2 | 3 | 4 | 5 | 6 | 7 | 8 | 9 | 10 |
|---|---|---|---|---|---|---|---|---|---|---|
| 3 | 3 | 2 | 1 | 6 | 5 | 4 | 10 | 9 | 8 | 9 |

| No. | EVALUATION VALUE | 1,1 | 1,2 | 1,3 | ... | 10,9 | 10,10 |
|---|---|---|---|---|---|---|---|
| 1 | xxx | 1 | 0 | 0 | ... | 0 | 1 |
| 2 | yyy | 0 | 1 | 0 | ... | 0 | 1 |
| 3 | zzz | 0 | 0 | 1 | ... | 1 | 0 |

| No. | 1,1 | 1,2 | 1,3 | ... | 10,9 | 10,10 |
|---|---|---|---|---|---|---|
| 4 | 0 | 0 | 1 | ... | 1 | 0 |

FIG. 13

| | | | | |
|---|---|---|---|---|
| | v0 | v1 | v2 | v3 |
| TARGET | 3 | 0 | 1 | 2 |
| | v0 | v1 | v2 | v3 |
| EVALUATION VALUE | 2 | 3 | 1 | 0 |

FIG. 14

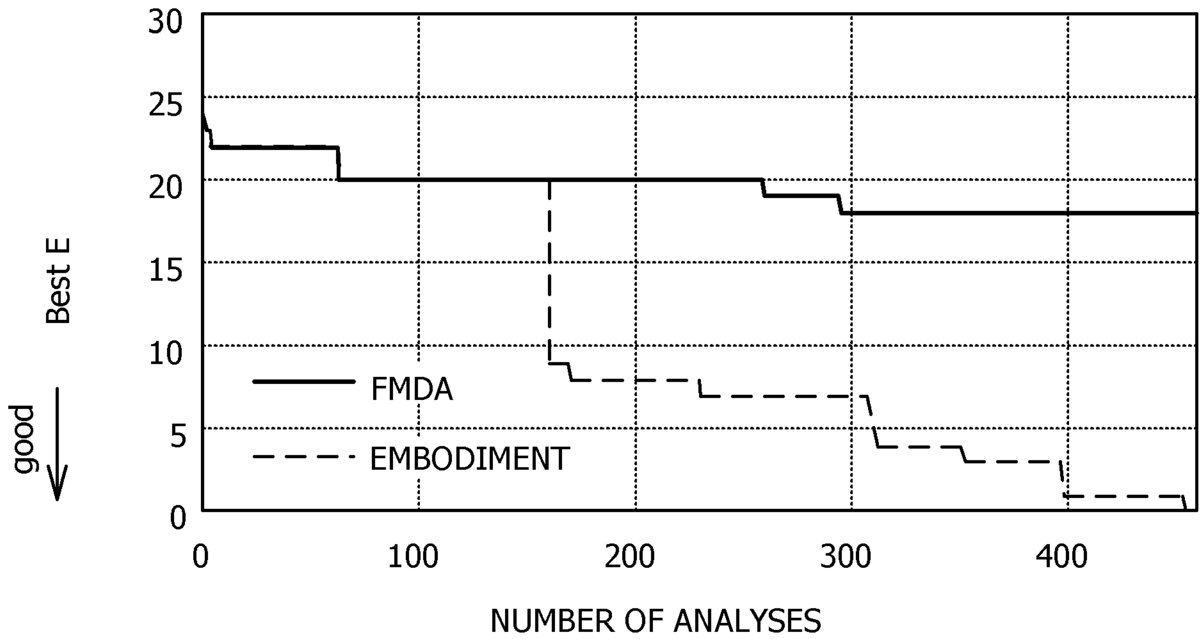
30
25
20
15
10
5
0
Best E
good
FMDA
EMBODIMENT
0
100
200
300
400
NUMBER OF ANALYSES

FIG. 15A

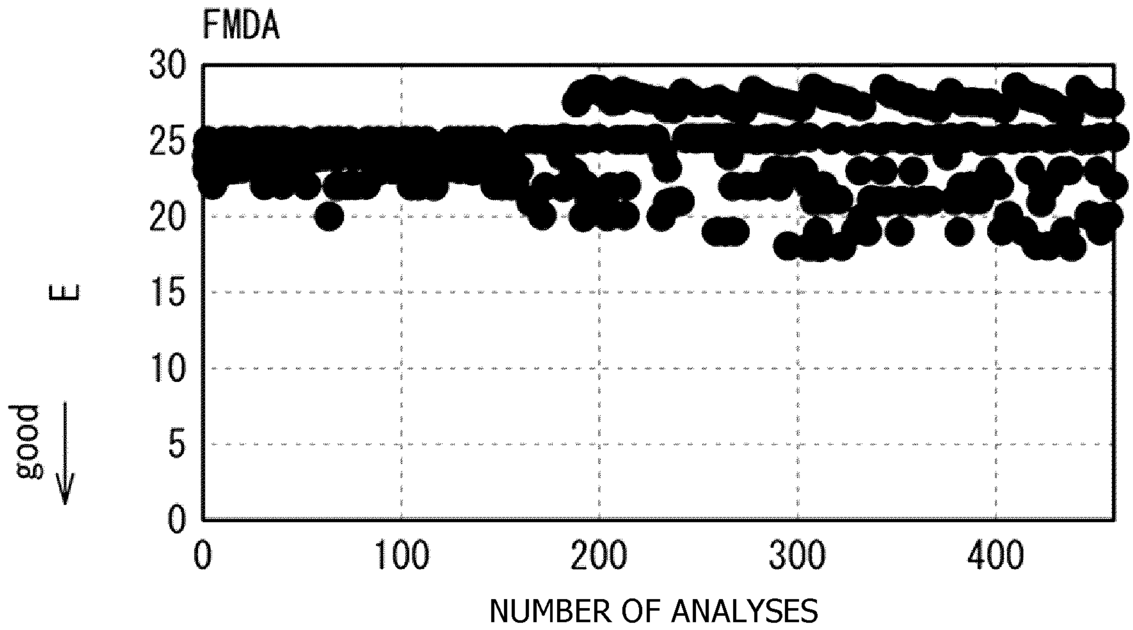


FIG. 15B

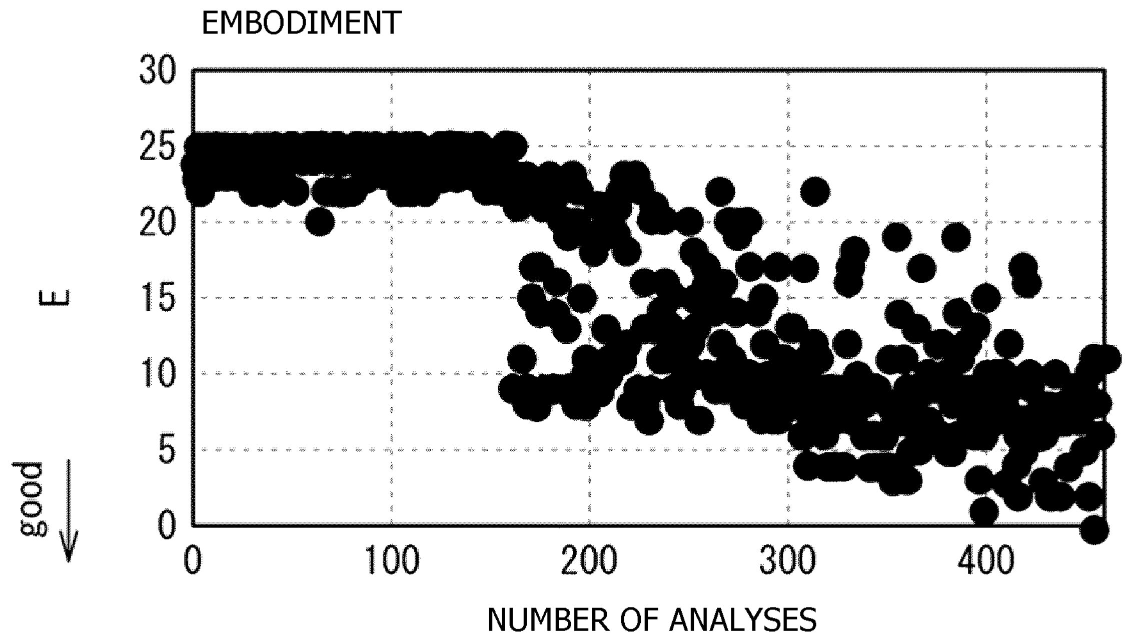

Europäisches Patentamt
European Patent Office
Office européen des brevets

# EUROPEAN SEARCH REPORT

Application Number
EP 24 21 5099

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/180210 A1 (MARUO AKITO [JP] ET AL) 9 June 2022 (2022-06-09)<br>* paragraph [0005] - paragraph [0008] *<br>* paragraph [0011] *<br>* paragraph [0143] - paragraph [0170] * | 1-15 | INV.<br>G06N3/126<br>G06N5/01 |
| X,D | & JP 2022 090249 A (FUJITSU LTD) 17 June 2022 (2022-06-17)<br>----- | 1-15 | |
| A | WILSON BLAKE A ET AL: "Machine learning framework for quantum sampling of highly constrained, continuous optimization problems",<br>APPLIED PHYSICS REVIEWS, AMERICAN INSTITUTE OF PHYSICS, 2 HUNTINGTON QUADRANGLE, MELVILLE, NY 11747,<br>vol. 8, no. 4,<br>29 December 2021 (2021-12-29),<br>XP012262363,<br>DOI: 10.1063/5.0060481<br>[retrieved on 2021-12-29]<br>* page 1 - page 3 *<br>----- | 1-15 | |

TECHNICAL FIELDS SEARCHED (IPC)

G06N

The present search report has been drawn up for all claims

| Place of search | Date of completion of the search | Examiner |
|---|---|---|
| The Hague | 28 April 2025 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

4

EPO FORM 1503 03.82 (P04C01)

## ANNEX TO THE EUROPEAN SEARCH REPORT ON EUROPEAN PATENT APPLICATION NO. EP 24 21 5099

This annex lists the patent family members relating to the patent documents cited in the above-mentioned European search report. The members are as contained in the European Patent Office EDP file on
The European Patent Office is in no way liable for these particulars which are merely given for the purpose of information.

28-04-2025

| Patent document cited in search report | Publication date | Patent family member(s) | Publication date |
|---|---|---|---|
| US 2022180210 A1 | 09-06-2022 | CN 114595549 A | 07-06-2022 |
| | | EP 4009200 A1 | 08-06-2022 |
| | | JP 2022090249 A | 17-06-2022 |
| | | US 2022180210 A1 | 09-06-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023108368 A
- WO 2023276213 A
- JP 2022090249 A